# EUROPEAN PATENT SPECIFICATION

(11) **EP 3 203 690 B1**
(45) Date of publication and mention of the grant of the patent: **02.06.2021**
(21) Application number: 15801977.8
(22) Date of filing: 22.01.2015
(51) Int. Cl.: H04L 12/58

(54) **MESSAGE TRANSMISSION METHOD AND APPARATUS, AND ELECTRONIC DEVICE**
NACHRICHTENÜBERTRAGUNGSVERFAHREN UND VORRICHTUNG SOWIE ELEKTRONISCHE VORRICHTUNG
PROCÉDÉ ET APPAREIL DE TRANSMISSION DE DONNÉES, ET DISPOSITIF ÉLECTRONIQUE

(30) Priority: 30.09.2014 CN 201410521744
(43) Date of publication of application: 09.08.2017
(73) Proprietor: Xiaomi Inc., Beijing 100085 (CN)
(72) Inventor: LIU, Guoming, Beijing 100085 (CN)
(74) Representative: Hughes, Andrea Michelle
(86) International application number: PCT/CN2015/071311
(87) International publication number: WO 2016/050020

(56) References cited:
- CN-A- 101 089 817
- CN-A- 101 141 175
- CN-A- 102 769 495
- CN-A- 103 870 578
- CN-A- 104 243 288
- US-A1- 2007 076 751
- US-A1- 2007 282 963
- US-A1- 2010 211 599

## Description

### TECHNICAL FIELD

The present disclosure relates to the field of communication technologies, and more particularly, to a method and a device for transferring a message, and an electronic equipment.

### BACKGROUND

A user may initiate an association establishing request to other users based on information interaction technologies such as an instant messaging (IM, Instant Messaging) and the like. If the opposite side receives the request, then an association relationship may be established between the two users. That is, the two users become "buddies" mutually. However, it is more likely that users will become buddies when knowing each other in reality; otherwise, the users may usually reject or neglect the association establishing request initiated by an unknown user, which makes it difficult to realize information interaction between unknown users. Messaging systems are described in US 2007/282963 and US 2010/211599.

### SUMMARY

The present disclosure provides, as defined by the claims, a method and a device for transferring a message and an electronic equipment for solving the technical problem in the related arts that the information display mode is not beneficial for operation.

The technical solutions provided by the embodiments of the present disclosure may include the following advantageous effects:
Through establishing the message passing on path, the present disclosure can realize information interaction between unknown users based on the message passing on path without needs of establishing an association relationship between users in advance.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a method for transferring a message based on a server side according to an exemplary embodiment.
Fig. 2 is a flow chart showing a method for transferring a message according to an exemplary embodiment.
Fig. 3 is a block diagram showing an association relationship between user accounts according to an exemplary embodiment.
Fig. 4 is a block diagram showing a message passing on path according to an exemplary embodiment.
Fig. 5 is a block diagram showing another association relationship between user accounts according to an exemplary embodiment.
Fig. 6 is a block diagram showing another message passing on path according to an exemplary embodiment.
Fig. 7 is a flow chart showing another method for transferring a message according to an exemplary embodiment.
Fig. 8 is a flow chart showing another method for transferring a message according to an exemplary embodiment.
Fig. 9 is a flow chart showing a method for transferring a message based on a terminal side according to an exemplary embodiment.
Fig. 10 is a block diagram showing another message passing on path according to an exemplary embodiment.
Fig. 11 is a flow chart showing another method for transferring a message based on a terminal side according to an exemplary embodiment.
Fig. 12 is a flow chart showing a method for transferring a message according to an exemplary embodiment.
Figs. 13-19 are block diagrams showing a device for transferring a message based on a server side according to an exemplary embodiment.
Fig. 20 is a block diagram showing a device for transferring a message based on a server side according to an exemplary embodiment.
Figs. 21-22 are block diagrams showing a device for transferring a message based on a terminal side according to an exemplary embodiment.
Figs. 23-24 are block diagrams showing another device for transferring a message based on a terminal side according to an exemplary embodiment.
Fig. 25 is a block diagram showing a device for transferring a message based on a terminal side according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with some aspects related to the invention as recited in the appended claims.

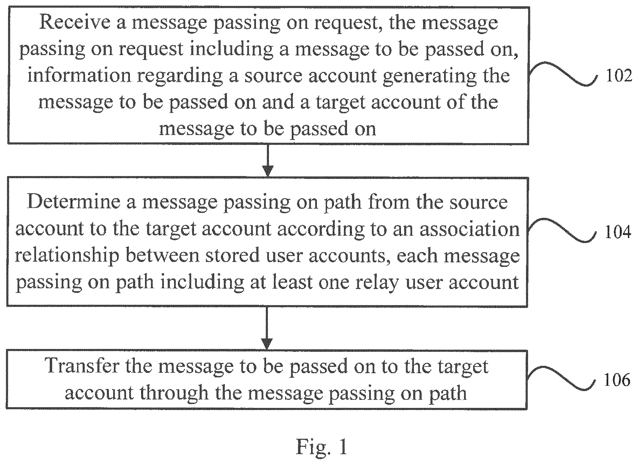

Fig. 1 is a flow chart showing a method for transferring a message according to an exemplary embodiment. As shown in Fig. 1, the method is used in a server and the method includes the following steps.

In step 102, a message passing on request is received. The message passing on request includes a message to be passed on, information regarding a source account generating the message to be passed on and a target account of the message to be passed on.

In the embodiment, the target account is an account of an unknown user with whom a user desires to realize information interaction, for example, accounts of some public figures. Since the user does not establish an association relationship with the target account, the information interaction manner in the art cannot ensure that the user sends interaction information to the target account or the sent interaction information may be possibly neglected by the target account. That is, the existing art cannot ensure the normal interaction between users unknown to each other.

In the present embodiment, a user may realize the information interaction between unknown users based on the technical solution disclosed by the present disclosure by installing a corresponding APP, such as "Michat" and the like on the terminal. The APP is configured with a "message passing on (only for illustration, and other expressions are also applicable)" function. In the APP, the user logs into his/her account, determines the account of an unknown user, and inputs the interaction information to be sent, and then may initiate a corresponding message passing on request to a server by starting the "message passing on" function. The "message to be passed on" in the message passing on request is the interaction information that the user expects to send to the unknown user, the "source account" is the account logged in by the user, and the "target account" is the account of the unknown user with whom the user expects to interact.

As an exemplary embodiment, a user may directly input the account of an unknown user. As another exemplary embodiment, a user may look up the account of an unknown user with whom he/she wishes to interact in a contact list of buddies, or acquire the account of an unknown user through "searching" function, and then in corresponding application interface, a "message passing on" function button may be displayed in an associated area of the account of the unknown user; in this way, the user may select the function button and then input "message to be passed on" to initiate a message passing on request aiming at the unknown user to the server.

In the present embodiment, as an exemplary embodiment, the message passing on request received by the server may be sent in a plain text. As another exemplary embodiment, the message passing on request received by the server may be sent in a cipher text to improve information security. The terminal may employ passwords which are obtained
through pre-negotiation with the server to perform encryption operations on the message passing on request or information therein.

In the present embodiment, the message to be passed on may include message contents of various forms such as texts, pictures, links and the like, which are not be limited in the present disclosure.

In step 104, a message passing on path from the source account to the target account is determined according to an association relationship between stored user accounts. Each message passing on path includes at least one relay user account.

In the present embodiment, since the social circle of each user may be different, communication between any two unknown users may be established due to overlapping and intersection of the social circles of different users. For example, "Six Degrees of Separation" shows that any two unknown users may be separated by five users at most. Therefore, a message passing on path from the source account to the target account may be established on the basis of the "passing on" effect among the social circles of different users. A user account between the source account and the target account in the message passing on path, i.e., a relay user account, serves to realize a "relay" function.

In step 106, the message to be passed on is transferred to the target account through the message passing on path.

In the present embodiment, although a direct association relationship is not established in advance between the source account and the target account, an indirect association relationship is actually established between the source account and the target account on the basis of the message passing on path. Thus, information interaction between unknown users is realized.

It can be known from the foregoing embodiment that, the present disclosure may generate a message passing on path corresponding to the accounts of any unknown users by analyzing association relationships established between user accounts, and then may realize information interaction between unknown users on the basis of the indirect association effect of the message passing on path.

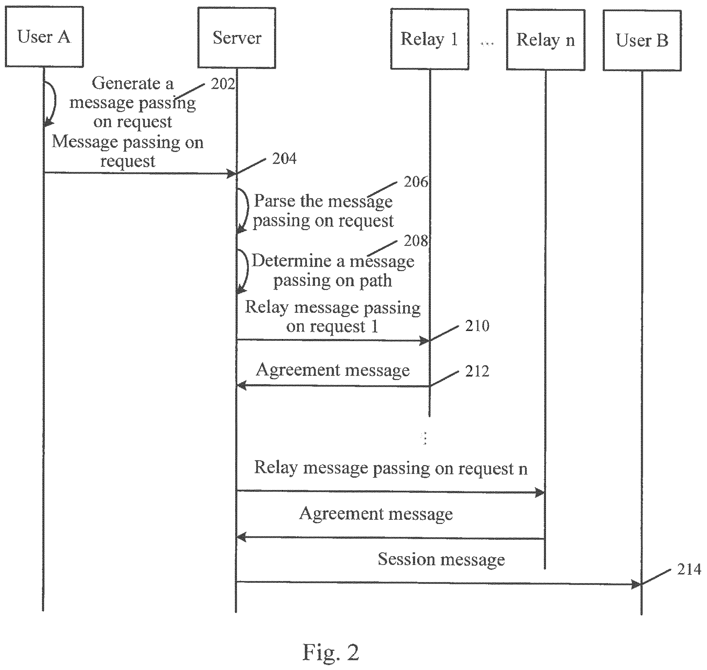

Referring to Fig. 2, it is a flow chart showing a method for transferring a message according to an exemplary embodiment. The method includes the following steps.

In step 202, it is assumed that a user A and a user B do not perform an account association operation on a server in advance. When the user A expects to send interaction information to the user B, a message passing on request may be generated. The message passing on request includes the account of the user A, the account of the user B and interaction message that the user A expects to send to the user B.

In the present embodiment, the user A logs intp his/her account on a terminal, designates the account of the user B on the terminal, and inputs the interaction message which is expected to send to the user B, and thus the message passing on request is generated.

In the message passing on request, the account of the user A is a "source account", the account of the user B is a "target account", and the interaction message that the user A expects to send to the user B serves as a message to be passed on of this "message passing on" operation.

In step 204, the user A sends the message passing on request to the server.

In step 206, the server parses the received message passing on request, and acquires the source account, the target account and the message to be passed on

In step 208, the server determines a message passing on path with the source account as a start node and the target account as a terminal node according to an association relationship between stored user accounts. Moreover, at least one relay user account is included between the start node and the terminal as a relay node to reflect the effect of "message passing on" operation. A direct association relationship exists between adjacent relay user accounts.

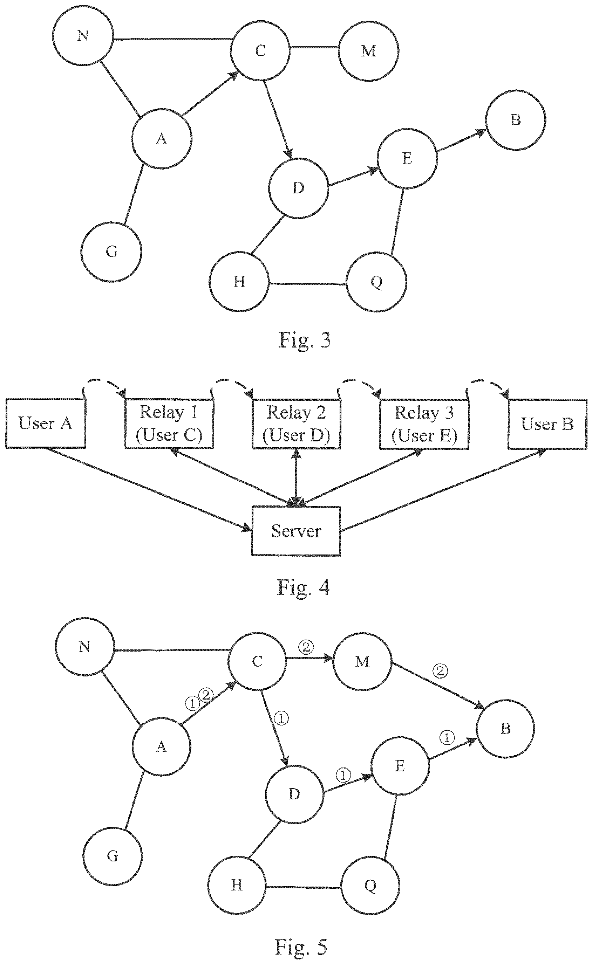

As an exemplary embodiment, Fig. 3 is a block diagram showing an association relationship between user accounts according to an exemplary embodiment. It is assumed that association relationships between accounts as shown in Fig. 3 exist among users such as a user A, a user B, a user C, a user D, a user E, a user G, a user H, a user M, a user N, a user Q and the like. Although a direct association relationship (represented as the connection line in Fig. 3) does not exist between the user A and the user B, an indirect association between the user A and the user B may be realized through the "passing on" effects of the association relationships between the user A and other users, the association relationships between the user B and other users, and the association relationships between other users. For example, as shown in Fig. 4: user A→user C→user D→user E→user B, a message passing on path with the account of the user A as the start node and the account of the user B as the terminal node is established.

In step 210, the server sends a relay message passing on request 1 to the first relay user account (i.e. relay 1) according to the determined message passing on path.

In the present embodiment, corresponding to the message passing on path as shown in Fig. 3, it is assumed that the relay 1 is the account of the user C. The user C may select to agree with, and thus the server will continue to query the next relay user account; or, the user C may select to reject, and thus the server may: 1) terminate this message passing on operation; 2) if other message passing on path exists, directly switch to another message passing on path; and 3) query the user A, and request the user A to determine whether to terminate this message passing on operation, or switch to another message passing on path, or reinitiate a request to the user C.

In step 212, when the relay 1 agrees with the relay message passing on request 1, the relay 1 returns an agreement message to the server. Instead, if the relay 1 does not agree with the relay message passing on request, the relay 1 may return a rejection message to the server.

In the present embodiment, the server after receiving the agreement or rejection message returned by each relay user account, may notify the user A, so that the user A knows the current execution state of this message passing on operation.

After the server receives the agreement message returned by the relay 1, if the next level of the relay 1 is still a relay user account, for example, the user D serving as a relay 2 (see the message passing on path as shown in Fig. 4), then the server needs to continue to send a relay message passing on request 2 to the relay 2, i.e. repeating the processes of step 210 and step 212, until the server sends a relay message passing on request n to the last level relay user account, i.e. a relay n as shown in Fig. 2, and receives an agreement message returned by the relay n, jump to step 214.

In step 214, when all the relay user accounts in the message passing on path agree with passing on the message, the server sends a session message to the user B.

In the present embodiment, the session message may include a message to be passed on that the user A expects to send to the user B and the information regarding the message passing on path , so that the user B may learn that although the user B and the user A are not "buddies", the user B and the last level relay user account (i.e. the relay n) in the message passing on path are buddies, and a certain indirect association relationship exists between the user B and the user A on the basis of passing on of a buddy relationship between adjacent user accounts in the message passing on path. Thus, abruptness possibly caused by the message passing on operation is reduced and thereby influences caused to the user B are avoided.

It can be known from the foregoing embodiment that the present disclosure generates the message passing on path through the server and sends the relay message passing on request to each user account in the message passing on path, so that unknown users can finally realize information interaction in the case that the relay message passing on request is agreed with. Taking the message passing on path as shown in Fig. 4 as an example, from the viewpoints of the user A and the user B, a message sent by the user A is sent to the user B via a path of "user A→user C→user D→user E→user B". But actually, after the server sends the request to each relay user account, when all of the relay user accounts agree with the message passing on operation, the server directly sends the message to be passed on from the user A to the user B.

### Please note:

### 1. A plurality of message passing on paths

In step 208, a plurality of message passing on paths may be acquired when the server determines message passing on paths with the account of the user A as the start node and the account of the user B as the terminal node. For example, when the user account relationships as shown in Fig. 3 are changed into the relationships as shown in Fig. 5, if an account association relationship established in advance exists between the user M and the user B, then two message passing on paths as follows may exist:
path ①: user A→user C→user D→user E→user B, wherein three relays, i.e., the user C, the user D and the user E, are included in this path; and
path ②: user A→user C→user M→user B, wherein two relays, i.e., the user C and the user M, are included in this path.

Therefore, as an exemplary embodiment, the server may directly select the message passing on path having minimum number of relay user accounts. For example, the above path ① includes three relay user accounts while the path ② includes two relay user accounts; therefore, the path ② shall be selected so as to improve the efficiency in message passing on.

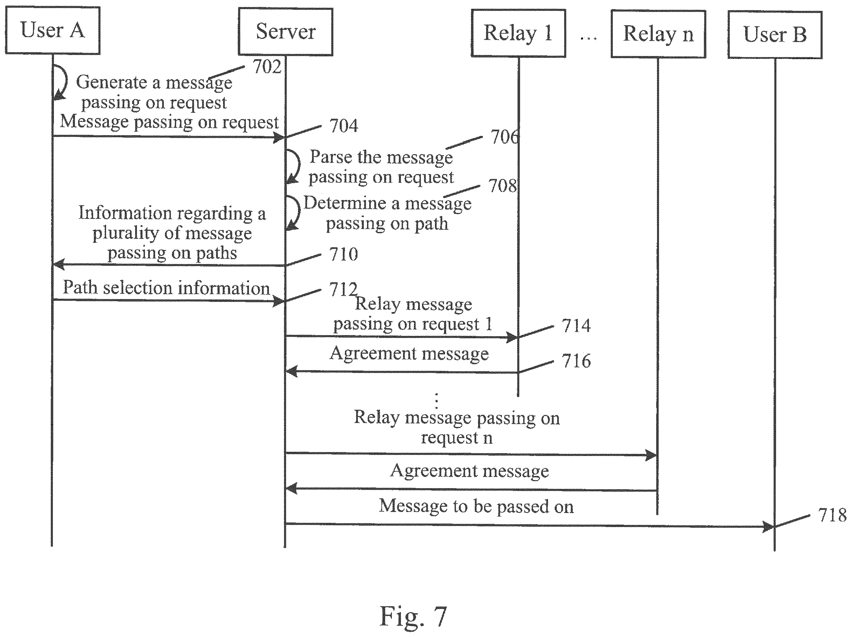

As another exemplary embodiment, Fig. 7 is a flow chart showing another method for transferring a message according to an exemplary embodiment, and the method includes the following steps.

Step 702 to step 708 are the same as step 202 to step 208 as shown in Fig. 2, and the detailed descriptions thereof are omitted.

In step 710, when the server determines a plurality of message passing on paths, the server sends information regarding the plurality of message passing on paths to the user A, for example, the above path ① and path ②. The server may send the number of the relay user accounts included in each message passing on path or the number of all the user accounts only, or send the detailed information such as the user accounts included in each message passing on path and the association relationship between the user accounts.

In step 712, the server receives path selection information returned from the user A, and determines the message passing on path which the user A expects to employ according to the path selection information. Then, subsequent step 714 to step 718 are performed.

Step 714 to step 718 are the same as step 210 to step 214 as shown in Fig. 2, and detailed descriptions thereof are omitted.

### 2. Relay message passing on request

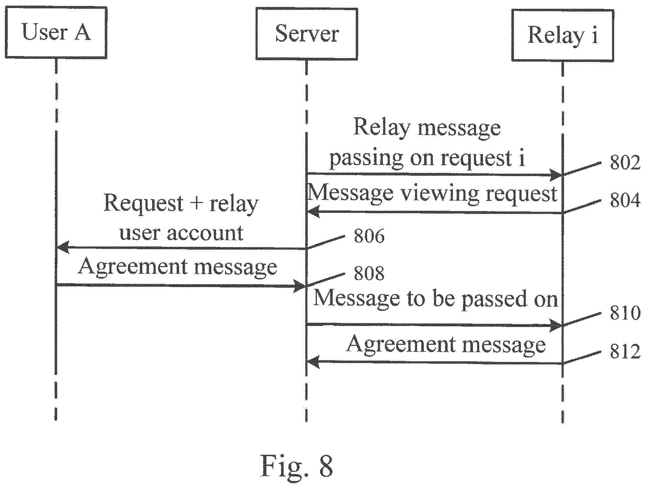

Referring to Fig. 8, it is a flow chart showing another method for transferring a message according to an exemplary embodiment. The method includes the following steps.

In step 802, the server sends a relay message passing on request i to a relay i according to the selected message passing on path.

In step 804, the server receives a message viewing request returned from the relay i.

In the present embodiment, as an exemplary embodiment, the relay message passing on request i is only used for passing on the "request" itself to the relay i and thus does not include the message to be passed on input by the user A. However, if it is assumed that the relay i responds to a user i, then the user i may possibly expect to know the content of the message to be passed on so as to ensure that the message to be passed on will not disturb the target account.

Therefore, the relay i may send the message viewing request to the server so as to acquire the detailed message to be passed on.

In step 806, the server sends the message viewing request and the user account of the relay i to the user A, so as to notify the user A of the information that "the user i expects to view the contents of the message to be passed on".

In the present embodiment, the server may directly forward the "message viewing request" sent from the relay i to the user A, or may generate a new message viewing request and send the new message viewing request to the user A.

In step 808, the server receives an agreement message returned from the user A.

In the present embodiment, the server may also possibly receive a rejection message returned from the user A, and then the server needs to send the rejection message to the relay i, and the relay i may determine whether to agree with this message passing on operation on this basis.

In step 810, the server sends the contents of the message to be passed on to the relay i.

In step 812, the server receives an agreement message returned from the relay i and further performs subsequent processing, and detailed descriptions thereof are omitted here.

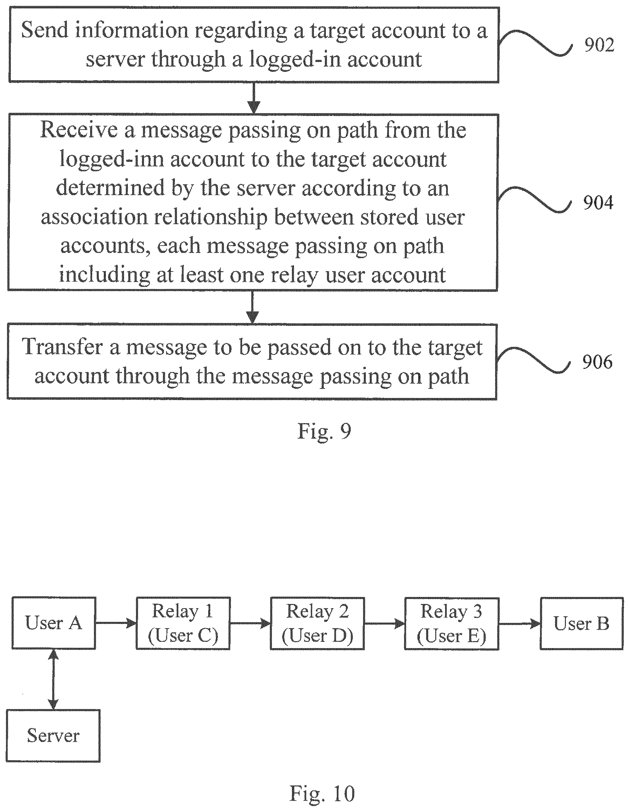

Fig. 9 is a flow chart showing a method for transferring a message based on a terminal side according to an exemplary embodiment. As shown in Fig. 9, the method is used on a terminal and the method includes the following steps.

In step 902, information regarding a target account is sent to a server through a logged-in account.

In the present embodiment, a user after logging into his/her account in an APP on a terminal, may trigger a "message passing on" function configured in the APP, so as to send an interaction message to an unknown user. Therefore, the user needs to notify the server of a target account with which he/she expects to perform message interaction, so that the server may determine a corresponding message passing on path.

As an exemplary embodiment, a user may directly input the account of an unknown user. As another exemplary embodiment, a user may look up the account of an unknown user with whom he wishes to interact in a contact list of buddies, or acquire the account of an unknown user through "searching" function, and then in corresponding application interface, a "message passing on" function button may be displayed in an associated area of the account of the unknown user; in this way, the user may select the function button and then input "message to be passed on" to initiate a message passing on request aiming at the unknown user to the server.

In step 904, a message passing on path from the logged-in account to the target account determined by the server according to an association relationship between stored user accounts is received. Each message passing on path includes at least one relay user account.

In the present embodiment, based on the association relationship between the user accounts established in advance, an indirect association relationship, i.e., a message passing on path, virtually between unknown accounts may be established through the passing on of the relationships between a plurality of levels of relay user accounts, and a direct association relationship established exists between all the adjacent user accounts in the message passing on path.

In step 906, a message to be passed on is transferred to the target account through the message passing on path.

In the present embodiment, the message to be passed on may include message contents of various forms such as texts, pictures, links and the like, which will not be limited in the present disclosure.

In the present embodiment, when only one message passing on path exists, the message to be passed on may be directly transferred through the message passing on path. When a plurality of message passing on paths exist, the terminal may randomly select a message passing on path or select a message passing on path having the minimum number of relay user accounts (or all the user accounts), or a user may select a message passing on path which he/she wishes to employ for transferring the message to be passed on.

In the present embodiment, a relay message passing on request may be sent to a first relay user account in the selected message passing on path and the relay message passing on request is sent to the target account through all the relay user accounts included in the message passing on path. The relay message passing on request includes the information regarding the selected message passing on path and the message to be passed on.

It is apparent that, different from the technical solution as shown in Fig. 1, the message to be passed on in the embodiment is directly transferred between respective user accounts, and the respective user accounts are not only for receiving and responding the relay message passing on request initiated by the server. For example, as shown in Fig. 10, when the selected message passing on path is "user A→user C→user D→user E→user B", interaction operations include: 1) interaction between the terminal used by the user A and the server, including the user A sending the target account to the server, and the server returning a corresponding message passing on path; and 2) transferring of the relay message passing on request between the user accounts in the message passing on path.

In the present embodiment, the relay message passing on request includes the message to be passed on and the information regarding the message passing on path, and the user account receiving the relay message passing on request may possibly be a relay user account and the target account.

Therefore, when a receiver account of the relay message passing on request is a relay user account, for example, the relay 1 (the user C), the relay 2 (the user D) or the relay 3 (the user E) as shown in Fig. 10, if the relay message passing on request is agreed with, the relay message passing on request is sent to a next level user account by the receiver account of the relay message passing on request. For example, when a terminal of the user C receives the relay message passing on request from the user A, the terminal does not know itself is a "relay" yet and, through viewing the information regarding the message passing on path in the relay message passing on request, the terminal knows that its role in this message passing on operation is the "relay 1", and the next level is the user D, so that the terminal sends the relay message passing on request to the user D in the case of agreement of the request. Likewise, when a terminal of the user D agrees with the received relay message passing on request, the terminal continue to send the relay message passing on request to the user E, and so on.

When the receiver account of the relay message passing on request is the target account, the information regarding the message passing on path in the relay message passing on request and the message to be passed on are shown by a terminal which the target account is assigned to. For example, when the relay 3 agrees with the relay message passing on request from the relay 2, the relay 3 sends the relay message passing on request to the user B, and a terminal of the user B determines itself as the target account through viewing the information of the message passing on path, so as to show the information regarding the message passing on path and the message to be passed on a terminal screen for the user B to view.

When the relay message passing on request is transferred between user accounts, the relay message passing on request may be forwarded by the server. Or, peer to peer direct communication may be realized through a peer to peer communication manner without forwarding by the server.

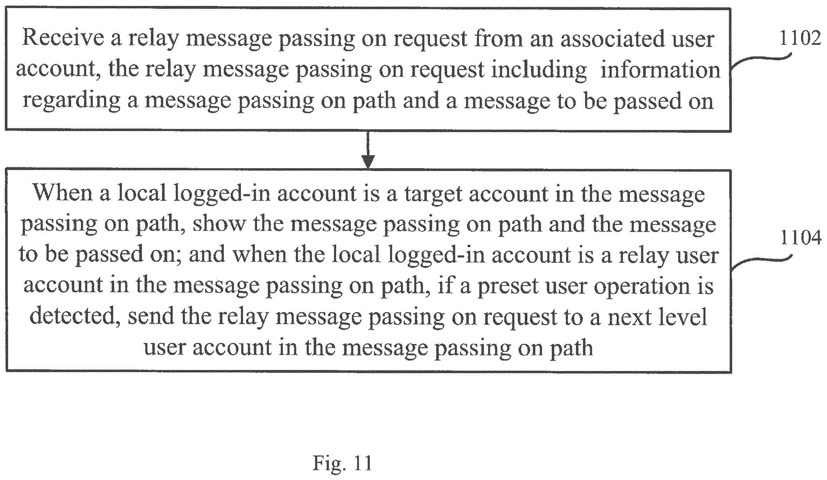

Based on the transferring message process as shown in Fig. 9, the user accounts in the message passing on path need to perform corresponding processing on the received relay message passing on request. The processing will be described hereinafter with reference to Fig. 11. As shown in Fig. 11, the method is used on a terminal, and the method includes the following steps.

In step 1102, a relay message passing on request from an associated user account is received. The relay message passing on request includes the information regarding a message passing on path and a message to be passed on.

In step 1104, a corresponding processing manner is employed according to the type of the logged-in account in the message passing on path:
when a local logged-in account is a target account in the message passing on path, showing the message passing on path and the message to be passed on; and
when the local logged-in account is a relay user account in the message passing on path, if a preset user operation is detected, sending the relay message passing on request to a next level user account in the message passing on path.

It can be seen from the above embodiment that the present disclosure may generate a message passing on path corresponding to the accounts of any unknown users through analyzing the association relationship established between users' accounts, and then may realize information interaction between unknown users on the basis of the indirect association effect of the message passing on path.

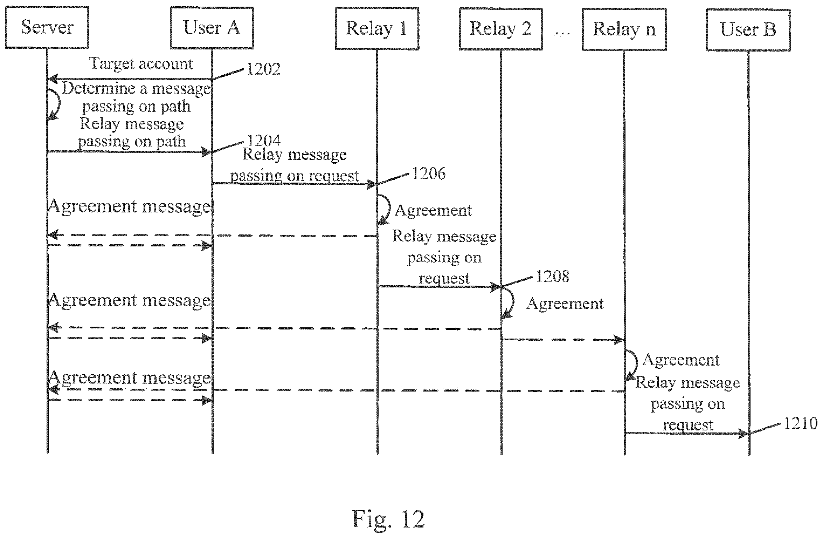

Fig. 12 is a flow chart showing another method for transferring a message according to an exemplary embodiment. As shown in Fig. 12, the method includes the following steps.

In step 1202, when a user A needs to initiate a message passing on operation, a target account is sent to a server. For example, the target account may be a user B.

The server determines a message passing on path with the account of the user A as a source account and the account of the user B as the target account according to the accounts of the user A and the user B as well as association relationships between all stored user accounts.

In step 1204, the server sends the determined message passing on path to a terminal corresponding to the account of the user A.

In the embodiment, if only one message passing on path exists, then the user A may directly perform the message passing on operation. If a plurality of message passing on paths exist, then one message passing on path needs to be selected therefrom for the current message passing on operation.

In step 1206, according to the selected message passing on path, the user A sends a relay message passing on request to a first relay user account. For example, when the relay user account is a relay 1, the user A sends the relay message passing on request to the relay 1.

In the present embodiment, the relay 1 may select to agree with or reject the received relay message passing on request. If the message passing on request is rejected, then the message passing on operation based on the current message passing on path is terminated, or the relay 1 returns a rejection message to the user A, and the user A determines to terminate this message transferring operation, or to resend the relay message passing on request, or change to another message passing on path.

Rather, if the relay 1 agrees with the relay message passing on request, then step 1208 is performed. Meanwhile, the relay 1 may send an agreement message to the server, and then server returns the agreement message to the user A, or the relay 1 directly sends the agreement message to the user A.

In step 1208, the relay 1 forwards the relay message passing on request to a relay 2.

In the present embodiment, the relay 2 performs operations similar to the foregoing operations performed by the relay 1. Actually, each relay user account receiving the relay message passing on request will perform operations similar to the operations performed by the relay 1 in step 1206, and thus the detailed descriptions thereof are omitted here.

In step 1210, when all the relay user accounts agree with the received relay message passing on request, the user B will receive the relay message passing on request from a relay n.

Through parsing the information regarding the message passing on path in the obtained relay message passing on request, the user B determines itself as the target account of this message passing on operation, and shows the parsed information regarding the message passing on path and the message to be passed on a screen of a terminal used by the user B.

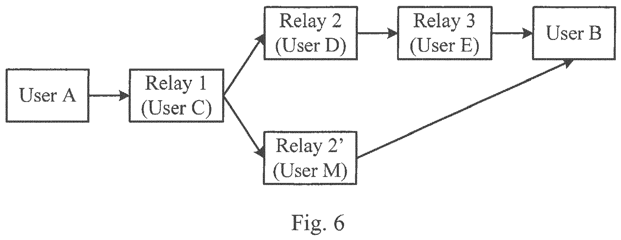

Corresponding to the embodiments of the method for transferring a message as shown in Figs. 1 to 8, the present disclosure also provides embodiments of a device for transferring a message.

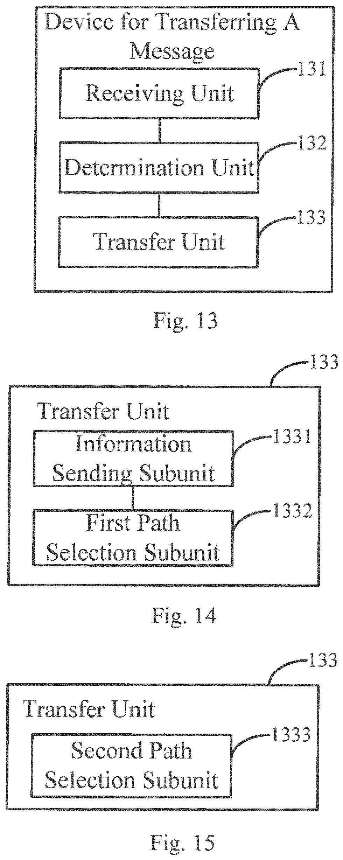

Fig. 13 is a block diagram showing a device for transferring a message according to an exemplary embodiment. Referring to Fig. 13, the device includes a receiving unit 131, a determination unit 132 and a transfer unit 133.

The receiving unit 131 is configured to receive a message passing on request. The message passing on request includes a message to be passed on, information regarding a source account generating the message to be passed on and a target account of the message to be passed on.

The determination unit 132 is configured to determine a message passing on path from the source account to the target account according to an association relationship between stored user accounts. Each message passing on path includes at least one relay user account.

The transfer unit 133 is configured to transfer the message to be passed on to the target account through the message passing on path.

In the message passing on path, the association relationship exists between adjacent user accounts.

In the above embodiment, through establishing the message passing on path, information interaction between unknown users can be realized based on the message passing on path without need of establishing an association relationship between users in advance.

As shown in Fig 14, Fig. 14 is a block diagram showing another device for transferring a message according to an exemplary embodiment. On the basis of the embodiment as shown in Fig. 13, the transfer unit 133 in the embodiment may include an information sending subunit 1331 and a first path selection subunit 1332.

The information sending subunit 1331 is configured to, when a plurality of message passing on paths exist, send information regarding the plurality of message passing on paths to the source account.

The first path selection subunit 1332 is configured to receive path selection information returned from the source account and select a message passing on path corresponding to the path selection information to transfer the message to be passed on to the target account.

In the above embodiment, a user may employ a desired message passing on path according to actual situations through sending the information regarding the plurality of message passing on paths to the source account.

As shown in Fig 15, Fig. 15 is a block diagram showing another device for transferring a message according to an exemplary embodiment. On the basis of the embodiment as shown in Fig. 13, the transfer unit 133 in the embodiment may include a second path selection subunit 1333.

The second path selection subunit 1333 is configured to, when a plurality of message passing on paths exist, select the message passing on path having minimum number of relay user accounts to transfer the message to be passed on to the target account.

In the above embodiment, the server may automatically select a proper message passing on path according to the number of the relay user accounts, which is beneficial for reducing user operations and improving the information interaction efficiency.

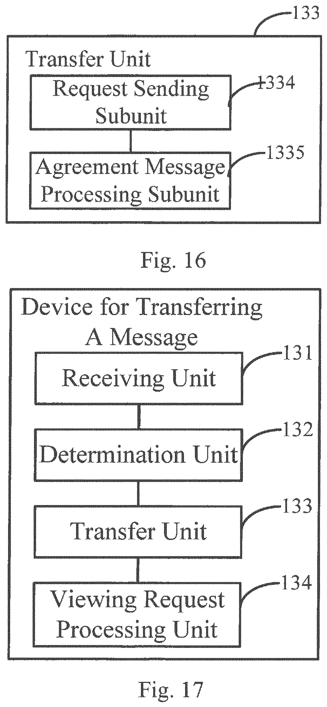

As shown in Fig 16, Fig. 16 is a block diagram showing another device for transferring a message according to an exemplary embodiment. On the basis of the embodiment as shown in Fig. 13, the transfer unit 133 in the embodiment may include a request sending subunit 1334 and an agreement message processing subunit 1335.

The request sending subunit 1334 is configured to send a relay message passing on request to a relay user account in the message passing on path.

The agreement message processing subunit 1335 is configured to, when the relay user account returns an agreement message, if the next level of the relay user account is another relay user account, send the relay message passing on request to the another relay user account, and if the relay user account is followed by the target account, send a session message including the message to be passed on to the target account.

As shown in Fig 17, Fig. 17 is a block diagram showing another device for transferring a message according to an exemplary embodiment. On the basis of the embodiment as shown in Fig. 16, the device for transferring a message in the embodiment may further include a viewing request processing unit 134.

The viewing request processing unit 134 is configured to, according to a message viewing request from the relay user account, send the message to be passed on to the relay user account; or, according to a message viewing request from the relay user account, send the message viewing request and the relay user account to the source account, and send the message to be passed on to the relay user account when the source account returns an agreement message.

It should be noted that the structure of the viewing request processing unit 134 in the embodiment of the device as shown in the foregoing Fig. 17 also may be included in any embodiment of the device as shown in Figs. 13 to 16, and the present disclosure will not impose limitations on this.

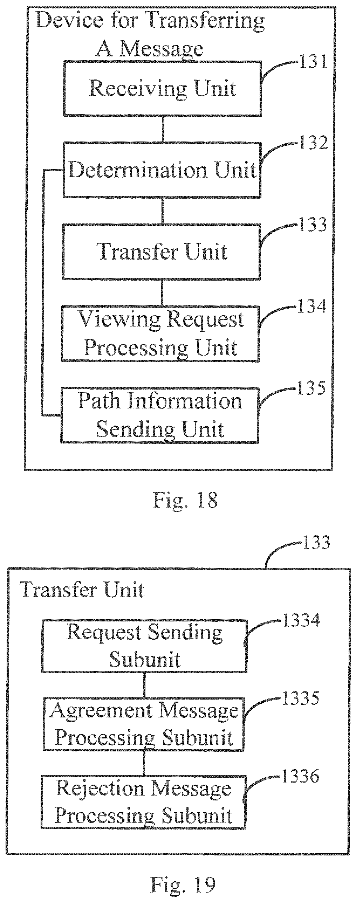

As shown in Fig 18, Fig. 18 is a block diagram showing another device for transferring a message according to an exemplary embodiment. On the basis of the embodiment as shown in Fig. 17, the device for transferring a message in the embodiment may further include a path information sending unit 135.

The path information sending unit is configured to send the information regarding the message passing on path to the target account.

As shown in Fig 19, Fig. 19 is a block diagram showing another device for transferring a message according to an exemplary embodiment. On the basis of the embodiment as shown in Fig. 16, the transfer unit 133 in the embodiment may further include a rejection message processing subunit 1336.

The rejection message processing subunit 1336 is configured to, when the relay user account returns a rejection message, change to another message passing on path and send the message to be passed on to the target account through the another message passing on path.

Accordingly, the present disclosure also provides a device for transferring a message, including: a processor; and a memory for storing instructions executable by the processor; wherein the processor is configured to: receive a message passing on request, the message passing on request including a message to be passed on, information regarding a source account generating the message to be passed on and a target account of the message to be passed on; determine a message passing on path from the source account to the target account according to an association relationship between stored user accounts, each message passing on path including at least one relay user account; and transfer the message to be passed on to the target account through the message passing on path.

Accordingly, the present disclosure also provides a terminal. The terminal includes a memory and one or more programs, wherein the one or more programs are stored in the memory and are configured to cause one or more processors to perform the one or more programs which include instructions of the following operations: receiving a message passing on request, the message passing on request comprising a message to be passed on, information regarding a source account generating the message to be passed on and a target account of the message to be passed on; determining a message passing on path from the source account to the target account according to an association relationship between stored user accounts, each message passing on path including at least one relay user account; and transferring the message to be passed on to the target account through the message passing on path.

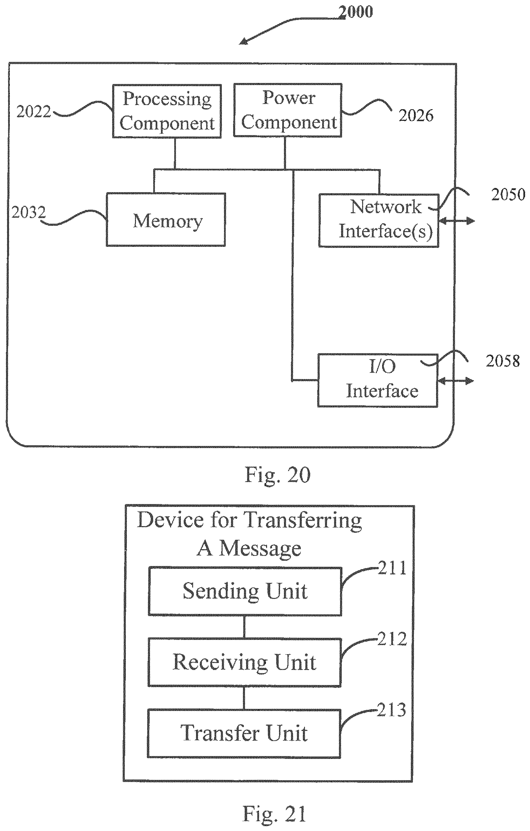

Fig. 20 is a block diagram showing a device 2000 for transferring a message according to an exemplary embodiment. For example, the device 2000 may be provided as a server. Referring to Fig. 20, the device 2000 includes a processing component 2022 that further includes one or more processors, and memory resources represented by a memory 2032 for storing instructions executable by the processing component 2022, such as application programs. The application programs stored in the memory 2032 may include one or more modules each corresponding to a set of instructions. Further, the processing component 2022 is configured to execute the instructions to perform the above method for transferring a message.

The device 2000 may also include a power component 2026 configured to perform power management of the device 2000, wired or wireless network interface(s) 2050 configured to connect the device 2000 to a network, and an input/output (I/O) interface 2058. The device 2000 may operate based on an operating system stored in the memory 2032, such as Windows ServerTM, Mac OS XTM, UnixTM, LinuxTM, FreeBSDTM, or the like.

Corresponding to the embodiment of the method for transferring a message as shown in Fig. 9, the present disclosure also provides embodiments of a device for transferring a message.

Fig. 21 is a block diagram showing a device for transferring a message according to an exemplary embodiment. Referring to Fig. 21, the device includes a sending unit 211, a receiving unit 212 and a transfer unit 213.

The sending unit 211 is configured to send information regarding a target account to a server through a logged-in account.

The receiving unit 212 is configured to receive a message passing on path from the logged-in account to the target account determined by the server according to an association relationship between stored user accounts. Each message passing on path includes at least one relay user account.

The transfer unit 213 is configured to transfer the message to be passed on to the target account through the message passing on path.

In the message passing on path, the association relationship exists between adjacent user accounts.

In the above embodiment, through establishing the message passing on path, information interaction between unknown users can be realized based on the message passing on path without need of establishing an association relationship between users in advance.

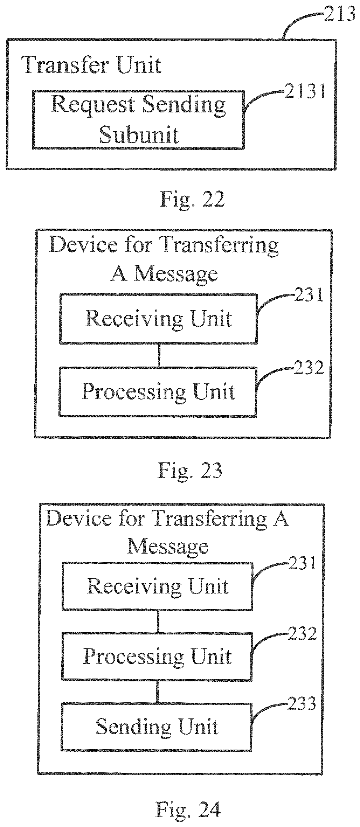

As shown in Fig 22, Fig. 22 is a block diagram showing another device for transferring a message according to an exemplary embodiment. On the basis of the embodiment as shown in Fig. 21, the transfer unit 213 in the embodiment may include a request sending subunit 2131.

The request sending subunit 2131 is configured to send a relay message passing on request to a first relay user account in the selected message passing on path and send the relay message passing on request to the target account through the at least one relay user account. The relay message passing on request includes the information regarding the selected message passing on path and the message to be passed on.

When a receiver account of the relay message passing on request is the relay user account, if the relay message passing on request is agreed with, the relay message passing on request is sent to a next level user account by the receiver account of the relay message passing on request.

When the receiver account of the relay message passing on request is the target account, the information regarding the message passing on path and the message to be passed in the relay message passing on request are shown by a terminal which the target account is assigned to.

Accordingly, the present disclosure also provides a device for transferring a message, including: a processor; and a memory for storing instructions executable by the processor; wherein the processor is configured to: send information regarding a target account to a server through a logged-in account; receive a message passing on path from the logged-in account to the target account determined by the server according to an association relationship between stored user accounts, each message passing on path including at least one relay user account; and transfer a message to be passed on to the target account through the message passing on path.

Accordingly, the present disclosure also provides a terminal. The terminal includes a memory and one or more than one programs, wherein the one or more programs are stored in the memory and are configured to cause one or more processors to perform the one or more programs which include instructions of the following operations: sending the information regarding a target account to a server through a logged-in account; receiving a message passing on path from the logged-in account to the target account determined by the server according to an association relationship between stored user accounts, each message passing on path including at least one relay user account; and transferring a message to be passed on to the target account through the message passing on path.

Corresponding to the embodiment of the method for transferring a message as shown in Fig. 10, the present disclosure also provides embodiments of a device for transferring a message.

Fig. 23 is a block diagram showing a device for transferring a message according to an exemplary embodiment. Referring to Fig. 23, the device includes a receiving unit 231 and a processing unit 232.

The receiving unit 231 is configured to receive a relay message passing on request from an associated user account. The relay message passing on request includes the information regarding a message passing on path and a message to be passed on.

The processing unit 232 is configured to, when a local logged-in account is a target account in the message passing on path, show the message passing on path and the message to be passed on; and when the local logged-in account is a relay user account in the message passing on path, if a preset user operation is detected, send the relay message passing on request to a next level user account in the message passing on path.

As shown in Fig 24, Fig. 24 is a block diagram showing another device for transferring a message according to an exemplary embodiment. On the basis of the embodiment as shown in Fig. 23, the device for transferring a message in the embodiment may further include a sending unit 233.

The sending unit 233 is configured to, when the preset user operation is detected, send an agreement message corresponding to the relay message passing on request to a server.

Accordingly, the present disclosure also provides a device for transferring a message, including: a processor; and a memory for storing instructions executable by the processor; wherein the processor is configured to: receive a relay message passing on request from an associated user account, the relay message passing on request including the information regarding a message passing on path and a message to be passed on; when a local logged-in account is a target account in the message passing on path, showing the message passing on path and the message to be passed on; and when the local logged-in account is a relay user account in the message passing on path, if a preset user operation is detected, send the relay message passing on request to a next level user account in the message passing on path.

Accordingly, the present disclosure also provides a terminal. The terminal includes a memory and one or more programs, wherein the one or more programs are stored in the memory and are configured to cause one or more processors to perform the one or more programs which include instructions of the following operations: receive a relay message passing on request from an associated user account, the relay message passing on request including the information regarding a message passing on path and a message to be passed on; when a local logged-in account is a target account in the message passing on path, showing the message passing on path and the message to be passed on; and when the local logged-in account is a relay user account in the message passing on path, if a preset user operation is detected, send the relay message passing on request to a next level user account in the message passing on path.

With regard to the devices in the above embodiments, the specific manner for respective modules performing operations have been described in the embodiments of method in detail and thus descriptions thereof are omitted here.

With regard to the embodiments of the device, since they are substantially corresponding to the embodiments of the method, please refer to the explanations about the embodiments of the method for the related portions. The embodiments of the device described above are only exemplary, wherein the units illustrated as separate parts may either be or not be physically separated, and the parts displayed by units may either be or not be physical units, i.e., the parts may be located in the same place, or be distributed on a plurality of network units. The object of the present disclosure may be implemented by selecting some or all of the modules herein according to actual demands. One of ordinary skills in the art may understand and implement without creative work.

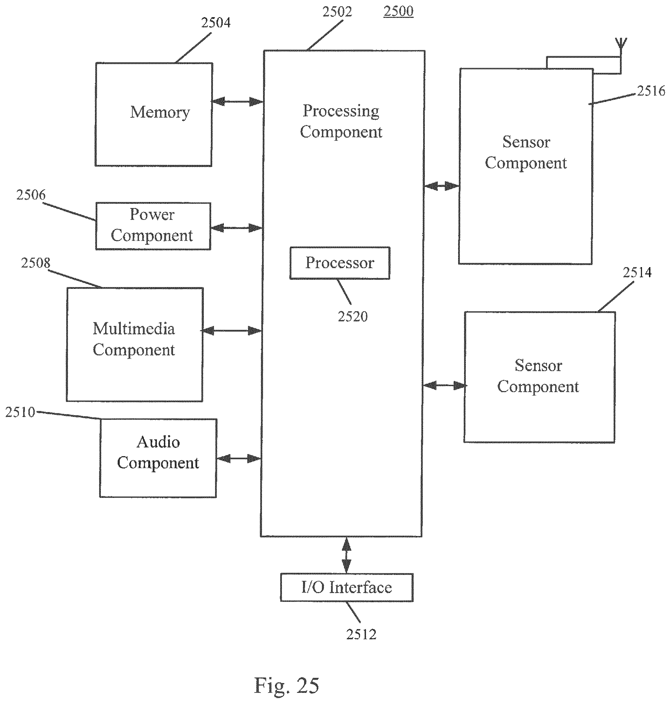

Fig. 25 is a block diagram showing a device 2500 for transferring a message according to an exemplary embodiment. For example, the device 2500 may be a mobile phone, a computer, a digital broadcast terminal, a messaging device, a gaming console, a tablet, a medical device, exercise equipment, a personal digital assistant, and the like.

Referring to Fig. 25, the device 2500 may include one or more of the following components: a processing component 2502, a memory 2504, a power component 2506, a multimedia component 2508, an audio component 2510, an input/output (I/O) interface 2512, a sensor component 2514, and a communication component 2516.

The processing component 2502 typically controls overall operations of the device 2500, such as the operations associated with display, telephone calls, data communications, camera operations, and recording operations. The processing component 2502 may include one or more processors 2520 to execute instructions to perform all or part of the steps in the above described methods. Moreover, the processing component 2502 may include one or more modules which facilitate the interaction between the processing component 2502 and other components. For instance, the processing component 2502 may include a multimedia module to facilitate the interaction between the multimedia component 2508 and the processing component 2502.

The memory 2504 is configured to store various types of data to support the operation of the device 2500. Examples of such data include instructions for any applications or methods operated on the device 2500, contact data, phonebook data, messages, pictures, video, etc. The memory 2504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 2506 provides power to various components of the device 2500. The power component 2506 may include a power management system, one or more power sources, and any other components associated with the generation, management, and distribution of power in the device 2500.

The multimedia component 2508 includes a screen providing an output interface between the device 2500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 2508 includes a front camera and/or a rear camera. The front camera and/or the rear camera may receive an external multimedia datum while the device 2500 is in an operation mode, such as a photographing mode or a video mode. Each of the front camera and the rear camera may be a fixed optical lens system or have focus and optical zoom capability.

The audio component 2510 is configured to output and/or input audio signals. For example, the audio component 2510 includes a microphone ("MIC") configured to receive an external audio signal when the device 2500 is in an operation mode, such as a call mode, a recording mode, and a voice recognition mode. The received audio signal may be further stored in the memory 2504 or transmitted via the communication component 2516. In some embodiments, the audio component 2510 further includes a speaker to output audio signals.

The I/O interface 2512 provides an interface between the processing component 2502 and peripheral interface modules, such as a keyboard, a click wheel, buttons, and the like. The buttons may include, but are not limited to, a home button, a volume button, a starting button, and a locking button.

The sensor component 2514 includes one or more sensors to provide status assessments of various aspects of the device 2500. For instance, the sensor component 2514 may detect an open/closed status of the device 2500, relative positioning of components, e.g., the display and the keypad, of the device 2500, a change in position of the device 2500 or a component of the device 2500, a presence or absence of user contact with the device 2500, an orientation or an acceleration/deceleration of the device 2500, and a change in temperature of the device 2500. The sensor component 2514 may include a proximity sensor configured to detect the presence of nearby objects without any physical contact. The sensor component 2514 may also include a light sensor, such as a CMOS or CCD image sensor, for use in imaging applications. In some embodiments, the sensor component 2514 may also include an accelerometer sensor, a gyroscope sensor, a magnetic sensor, a pressure sensor, or a temperature sensor.

The communication component 2516 is configured to facilitate communication, wired or wirelessly, between the device 2500 and other devices. The device 2500 can access a wireless network based on a communication standard, such as WiFi, 2G or 3G, or a combination thereof. In one exemplary embodiment, the communication component 2516 receives a broadcast signal or broadcast associated information from an external broadcast management system via a broadcast channel. In one exemplary embodiment, the communication component 2516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 2500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 2504, executable by the processor 2520 in the device 2500, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with the true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention should only be limited by the appended claims.

## Claims

1. A method for transferring a message through a telecommunication network from a source account of a first user to a target account of a second user who is not on a contact list of the first user, wherein the method comprises:
receiving (102, 204), by a server, a message passing on request, the message passing on request comprising a message to be passed on, information regarding the source account generating the message to be passed on and the target account to which the message is to be passed on;
determining (104, 208), by the server, a message passing on path from the source account to the target account according to an association relationship between stored user accounts, each message passing on path comprising at least one relay user account, wherein the at least one relay user account is at least one user account between the source account and the target account in the message passing on path; and
transferring (106), by the server, the message to be passed on to the target account through the message passing on path;
**characterized in that**, the transferring the message to be passed on to the target account through the message passing on path comprises:
sending (210), by the server, a relay message passing on request to a relay user account in the message passing on path; and
when the relay user account returns an agreement message to the server (212), if the relay user account is followed by another relay user account, sending, by the server, the relay message passing on request to the another relay user account, and if the relay user account is followed by the target account, sending (214), by the server, a session message comprising the message to be passed on to the target account.

2. The method according to claim 1, **characterized in that**, the method further comprises:
according to a message viewing request from the relay user account, sending the message to be passed on to the relay user account;
or, according to a message viewing request from the relay user account, sending the message viewing request and the relay user account to the source account, and sending the message to be passed on to the relay user account when the source account returns an agreement message; and preferably wherein the session message further comprises the information regarding the message passing on path.

3. The method according to any one of claims 1 or 2, **characterized in that**, the transferring the message to be passed on to the target account through the message passing on path comprises:
when the relay user account returns a rejection message, changing to another message passing on path and sending the message to be passed on to the target account through the another message passing on path.

4. A device for transferring a message through a telecommunication network from a source account of a first user to a target account of a second user who is not on a contact list of the first user, provided as a server (2000), wherein the device comprises:
a receiving unit configured to receive a message passing on request, the message passing on request comprising a message to be passed on, information regarding a source account generating the message to be passed on and a target account to which the message is to be passed on;
a determination unit configured to determine a message passing on path from the source account to the target account according to an association relationship between stored user accounts, each message passing on path comprising at least one relay user account, wherein the at least one relay user account is at least one user account between the source account and the target account in the message passing on path; and
a transfer unit configured to transfer the message to be passed on to the target account through the message passing on path;
**characterized in that**, the transferring the message to be passed on to the target account through the message passing on path comprises:
sending a relay message passing on request to a relay user account in the message passing on path; and
when the relay user account returns an agreement message to the server, if the relay user account is followed by another relay user account, sending the relay message passing on request to the another relay user account, and if the relay user account is followed by the target account, sending a session message comprising the message to be passed on to the target account.

5. A computer program, which when executing on a processor of a device, performs a method according to any one of claims 1 to 3.

## Patentansprüche

1. Verfahren zum Übertragen einer Nachricht über ein Telekommunikationsnetzwerk von einem Ursprungskonto eines ersten Benutzers zu einem Zielkonto eines zweiten Benutzers, der sich nicht auf einer Kontaktliste des ersten Benutzers befindet, wobei das Verfahren umfasst:
Empfangen (102, 204), durch einen Server, einer Nachrichtenweiterleitungsanforderung, wobei die Nachrichtenweiterleitungsanforderung eine weiterzuleitende Nachricht umfasst, Informationen in Bezug auf das Ursprungskonto, das die weiterzuleitende Nachricht generiert und das Zielkonto, zu dem die Nachricht weiterzuleiten ist;
Bestimmen (104, 208), durch den Server, eines Nachrichtenweiterleitungspfades von dem Ursprungskonto zu dem Zielkonto gemäß einer Zuordnungsbeziehung zwischen gespeicherten Benutzerkonten, wobei jeder Nachrichtenweiterleitungspfad mindestens ein Relaisbenutzerkonto umfasst, wobei das mindestens eine Relaisbenutzerkonto mindestens ein Benutzerkonto zwischen dem Ursprungskonto und dem Zielkonto in dem Nachrichtenweiterleitungspfad ist; und
Übertragen (106), durch den Server, der weiterzuleitenden Nachricht an das Zielkonto über den Nachrichtenweiterleitungspfad;
**dadurch gekennzeichnet, dass** das Übertragen der an das Zielkonto über den Nachrichtenweiterleitungspfad weiterzuleitenden Nachricht umfasst:
Senden (210), durch Server, einer Relaisnachrichtweiterleitungsanforderung an ein Relaisbenutzerkonto in dem Nachrichtenweiterleitungspfad; und
wenn das Relaisbenutzerkonto eine Zustimmungsnachricht an den Server (212) zurückführt, wenn dem Relaisbenutzerkonto durch ein anderes Relaisbenutzerkonto gefolgt wird, Senden, durch den Server, der Relaisnachrichtweiterleitungsanforderung an das andere Relaisbenutzerkonto, und wenn dem Relaisbenutzerkonto von dem Zielkonto gefolgt wird, Senden (214), durch den Server, einer Sitzungsnachricht, die die an das Zielkonto weiterzuleitende Nachricht umfasst.

2. Verfahren nach Anspruch 1, **dadurch gekennzeichnet, dass** das Verfahren weiter umfasst:
gemäß einer Anforderung zum Betrachten einer Nachricht von dem Relaisbenutzerkonto, Senden der an das Relaisbenutzerkonto weiterzuleitenden Nachricht;
oder, gemäß einer Anforderung zum Betrachten einer Nachricht von dem Relaisbenutzerkonto, Senden der Anforderung zum Betrachten der Nachricht und des Relaisbenutzerkontos an das Ursprungskonto, und Senden der an das Relaisbenutzerkonto weiterzuleitenden Nachricht, wenn das Ursprungskonto eine Zustimmungsnachricht zurücksendet; und vorzugsweise, wobei die Sitzungsnachricht weiter die Informationen in Bezug auf den Nachrichtenweiterleitungspfad umfasst.

3. Verfahren nach einem der Ansprüche 1 oder 2, **dadurch gekennzeichnet, dass** das Übertragen der an das Zielkonto über den Nachrichtenweiterleitungspfad an das Zielkonto zu übertragender Nachricht umfasst:
wenn das Relaisbenutzerkonto eine Ablehnungsnachricht zurückführt, Ändern zu einem anderen Nachrichtenweiterleitungspfad und Senden der an das Zielkonto weiterzuleitenden Nachricht über den anderen Nachrichtenweiterleitungspfad.

4. Vorrichtung zum Übertragen einer Nachricht über ein Telekommunikationsnetzwerk von einem Ursprungskonto eines ersten Benutzers zu einem Zielkonto eines zweiten Benutzers, der sich nicht auf einer Kontaktliste des ersten Benutzers befindet, die als ein Server (2000) bereitgestellt wird, wobei die Vorrichtung umfasst:
eine Empfangseinheit, die dafür ausgelegt ist, eine Nachrichtenweiterleitungsanforderung zu empfangen, wobei die Nachrichtenweiterleitungsanforderung eine weiterzuleitende Nachricht umfasst, Informationen in Bezug auf ein Ursprungskonto, das die weiterzuleitende Nachricht generiert, und ein Zielkonto, zu dem die Nachricht weiterzuleiten ist;
eine Bestimmungseinheit, die dafür ausgelegt ist, einen Nachrichtenweiterleitungspfad von dem Ursprungskonto zu dem Zielkonto gemäß einer Zuordnungsbeziehung zwischen gespeicherten Benutzerkonten zu bestimmen, wobei jede Nachricht, die auf dem Pfad läuft, mindestens ein Relaisbenutzerkonto umfasst, wobei das mindestens eine Relaisbenutzerkonto mindestens ein Benutzerkonto zwischen dem Ursprungskonto und dem Zielkonto in dem Nachrichtenweiterleitungspfad ist; und
eine Übertragungseinheit, die dafür ausgelegt ist, die weiterzuleitende Nachricht an das Zielkonto über den Nachrichtenweiterleitungspfad zu übertragen;
**dadurch gekennzeichnet, dass** das Übertragen der an das Zielkonto über den Nachrichtenweiterleitungspfad weiterzuleitenden Nachricht umfasst:
Senden einer Relaisnachrichtweiterleitungsanforderung an ein Relaisbenutzerkonto in dem Nachrichtenweiterleitungspfad; und
wenn das Relaisbenutzerkonto eine Zustimmungsnachricht an den Server zurückführt, wenn dem Relaisbenutzerkonto durch ein anderes Relaisbenutzerkonto gefolgt wird, Senden der Relaisnachrichtweiterleitungsanforderung an das andere Relaisbenutzerkonto, und wenn dem Relaisbenutzerkonto von dem Zielkonto gefolgt wird, Senden einer Sitzungsnachricht, die die an das Zielkonto weiterzuleitende Nachricht umfasst.

5. Computerprogramm, das, wenn es auf einem Prozessor einer Vorrichtung ausgeführt wird, ein Verfahren nach einem der Ansprüche 1 bis 3 durchführt.

## Revendications

1. Procédé de transmission d'un message via un réseau de télécommunication d'un compte source d'un premier utilisateur à un compte cible d'un second utilisateur qui ne se trouve pas sur une liste de contacts du premier utilisateur, dans lequel le procédé comprend :
la réception (102, 204), par un serveur, d'une demande de transmission de message, la demande de transmission de message comprenant un message à transmettre, des informations concernant le compte source générant le message à transmettre et le compte cible auquel le message doit être transmis ;
la détermination (104, 208), par le serveur, d'un trajet de transmission de message du compte source au compte cible conformément à une relation d'association entre des comptes utilisateur stockés, chaque trajet de transmission de message comprenant au moins un compte utilisateur relais, dans lequel le au moins un compte utilisateur relais est au moins un compte utilisateur entre le compte source et le compte cible dans le trajet de transmission de message ; et
la transmission (106), par le serveur, du message à transmettre au compte cible via le trajet de transmission de message ;
**caractérisé en ce que** la transmission du message à transmettre au compte cible via le trajet de transmission de message comprend :
l'envoi (210), par le serveur, d'une demande de transmission de message relais à un compte utilisateur relais dans le trajet de transmission de message ; et
lorsque le compte utilisateur relais renvoie un message d'accord au serveur (212), si le compte utilisateur relais est suivi par un autre compte utilisateur relais, l'envoi, par le serveur, de la demande de transmission de message relais à l'autre compte utilisateur relais, et si le compte utilisateur relais est suivi par le compte cible, l'envoi (214), par le serveur, d'un message de session comprenant le message à transmettre au compte cible.

2. Procédé selon la revendication 1, **caractérisé en ce que** le procédé comprend en outre :
conformément à une demande de visualisation de message en provenance du compte utilisateur relais, l'envoi du message à transmettre au compte utilisateur relais ;
ou, conformément à une demande de visualisation de message en provenance du compte utilisateur relais, l'envoi de la demande de visualisation de message et du compte utilisateur relais au compte source, et l'envoi du message à transmettre au compte utilisateur relais lorsque le compte source renvoie un message d'accord ; et de préférence dans lequel le message de session comprend en outre les informations concernant le trajet de transmission de message.

3. Procédé selon l'une quelconque des revendications 1 ou 2, **caractérisé en ce que** la transmission du message à transmettre au compte cible via le trajet de transmission de message comprend :
lorsque le compte utilisateur relais renvoie un message de rejet, le changement pour un autre trajet de transmission de message et l'envoi du message à transmettre au compte cible via l'autre trajet de transmission de message.

4. Dispositif de transmission d'un message via un réseau de télécommunication d'un compte source d'un premier utilisateur à un compte cible d'un second utilisateur qui ne se trouve pas sur une liste de contacts du premier utilisateur, prévu en tant que serveur (2000), dans lequel le dispositif comprend :
une unité de réception configurée pour recevoir une demande de transmission de message, la demande de transmission de message comprenant un message à transmettre, des informations concernant un compte source générant le message à transmettre et un compte cible auquel le message doit être transmis ;
une unité de détermination configurée pour déterminer un trajet de transmission de message du compte source au compte cible conformément à une relation d'association entre des comptes utilisateur stockés, chaque trajet de transmission de message comprenant au moins un compte utilisateur relais, dans lequel le au moins un compte utilisateur relais est au moins un compte utilisateur entre le compte source et le compte cible dans le trajet de transmission de message ; et
une unité de transmission configurée pour transmettre le message à transmettre au compte cible via le trajet de transmission de message ;
**caractérisé en ce que** la transmission du message à transmettre au compte cible via le trajet de transmission de message comprend :
l'envoi d'une demande de transmission de message relais à un compte utilisateur relais dans le trajet de transmission de message ; et
lorsque le compte utilisateur relais renvoie un message d'accord au serveur, si le compte utilisateur relais est suivi par un autre compte utilisateur relais, l'envoi de la demande de transmission de message relais à l'autre compte utilisateur relais, et si le compte utilisateur relais est suivi par le compte cible, l'envoi d'un message de session comprenant le message à transmettre au compte cible.

5. Programme informatique qui, lorsqu'il est exécuté sur un processeur d'un dispositif, met en œuvre un procédé selon l'une quelconque des revendications 1 à 3.
